## Europäisches Patentamt

(19) **European Patent Office**

**Office européen des brevets**

(11) Publication number: **0 322 416**
**B1**

(12) **EUROPEAN PATENT SPECIFICATION**

(45) Date of publication of patent specification: **30.01.91**    (51) Int. Cl.⁵: **F 16 L 3/10**

(21) Application number: **87906028.3**

(22) Date of filing: **10.09.87**

(86) International application number:
**PCT/SE87/00410**

(87) International publication number:
**WO 88/02084 24.03.88 Gazette 88/07**

(54) **A PIPE FASTENER.**

(30) Priority: **10.09.86 SE 8603785**

(43) Date of publication of application:
**05.07.89 Bulletin 89/27**

(45) Publication of the grant of the patent:
**30.01.91 Bulletin 91/05**

(84) Designated Contracting States:
**DE FR GB IT SE**

(56) References cited:
**DE-A-1 750 035**
**DE-A-2 013 147**
**DE-B-1 249 372**
**DE-B-2 016 346**
**FR-A-1 520 904**
**US-A-4 172 578**

(73) Proprietor: **STRÖM, Yngve**
**Furuvägen 6**
**S-183 68 Täby (SE)**

(72) Inventor: **STRÖM, Yngve**
**Furuvägen 6**
**S-183 68 Täby (SE)**

(74) Representative: **Nilsson, Karl et al**
**STENHAGEN PATENTBYRA AB Box 17 709**
**S-118 93 Stockholm (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**Description**

The present invention relates to a pipe fastener for securing a pipe in relation to a support structure and including a spacer element adapted to be located between a pipe and the support structure, and further including a fastener yoke which can be attached to the support structure and which comprises a yoke arm which extends over the spacer element and over any pipe placed on said spacer element and has a cupped seating to receive the pipe, wherein the spacer element is pivotable in relation to the attachment yoke to and from a pipe receiving position in which a pipe can be inserted between the spacer element and the attachment yoke and wherein the distance between the pivot axis of the spacer element and the outer end of the yoke arm is shorter than the distance between the pivot axis and the central region of said yoke arm.

DE—A—2 013 147 discloses a fastener of the above kind for fastening elongate articles, such as cables, to a support structure. This known fastener has, for each article to be fastened, a spacer element which before attaching the fastener to the support structure is freely pivotable to and from the pipe receiving position, irrespective of whether or not an elongate article has been inserted between the spacer element and the yoke arm cooperating therewith. FR—A—1 520 904 discloses a fastener for an elongate article of cylindrical cross-section. A main body portion of the fastener is provided with a groove for detachably receiving said article therein. An outer end portion of an arm pivotably connected to said body portion can be detachably secured to the body portion in a position in which the arm extends across the open side of the groove, to prevent an article located therein from leaving the groove laterally.

The object of the invention is to provide a novel and improved pipe fastener of the type envisaged which will enable pipes and like cylindrical objects to be secured readily to a support structure, such as a wall structure or ceiling structure.

To this end it is proposed in accordance with the invention that the spacer element is a cradle having a seating which is cupped to receive the pipe, the cupped seatings of the cradle and yoke being such as to exert a snap-locking action on a pipe inserted between said cradle and said yoke arm to retain said pipe therebetween. A pipe fastener of this construction facilitates the work of fitting a pipe to a support structure, since it enables the cradle to be held detachably in relation to the attachment yoke in the pipe retaining position through said snap-locking action either when the fastener is completely free from the support structure or when the fastener is loosely secured thereto. This snap-locking action is achieved in a particularly simple manner by the specific mutual arrangement of the cradle and the yoke arm in accordance with the invention.

The invention will now be described in more detail with reference to an exemplifying embodiment thereof illustrated in the drawing.

Figure 1 is a side view of an inventive pipe fastener secured to a support structure and securing a pipe firmly in relation to the structure.

Figure 2 is a view taken from the left in Figure 1.

Figure 3 is a side view similar to the view of Figure 1 but showing the pipe fastener in a pipe receiving position.

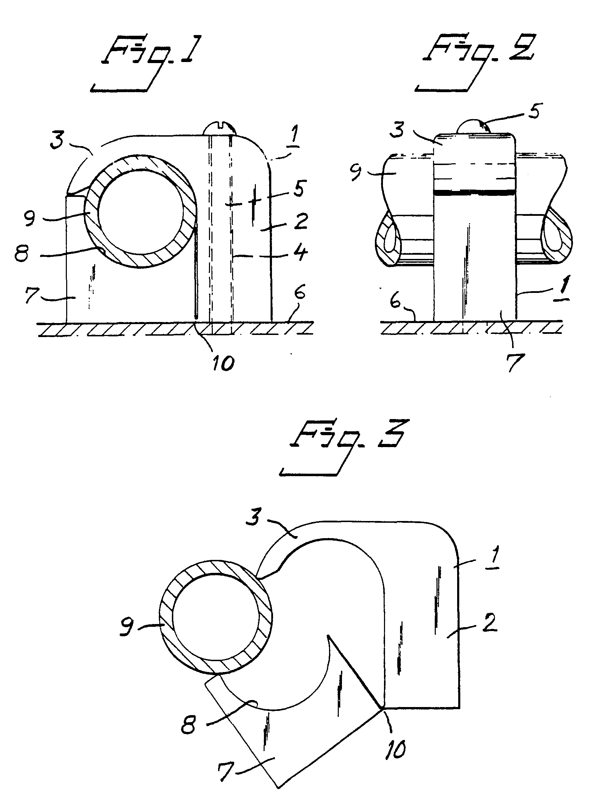

The pipe fastener illustrated in the drawing and generally referenced 1 therein comprises an attachment yoke which includes a shaft part 2 and a yoke arm 3. The shaft part 2 of the attachment yoke has provided therein a through-passing hole 4 adapted to accommodate a screw 5 for securing the attachment yoke 2, 3 to a support structure 6. A cradle 7 presents a cupped seating 8 for supporting a pipe 9 which in the illustrations of Figures 1 and 2 is held firmly between the cradle 7 and the yoke arm 3 extending over the cradle and the pipe 9. The cupped or curved undersurface of the yoke arm lies resiliently against the pipe section remote from the cupped seating 8 and holds the pipe in position in said seating, the cradle 7 forming a spacer or distance element which establishes a clearance between the pipe 9 and the opposing surface of the support structure 6, as will best be seen from Figure 2. The cradle 7 is formed integrally with the attachment yoke 2, 3 and is joined thereto over a flexible material bridge 10, which forms a pivot axis which is parallel with the pipe 9 and about which the cradle 7 can be swung relative to the attachment yoke 2, 3, as will be seen when comparing Figure 1 with Figure 3.

The fastener comprising the yoke 2, 3 and the cradle 7 is preferably made of a suitable plastics material and is conveniently manufactured by molding the fastener in an appropriate molding operation.

The cradle 7 can be swung relative to the attachment yoke 2, 3 about the pivot axis 10, between or beyond the pipe fitting position illustrated in Figure 3, in which position the pipe can be inserted laterally between the cradle 7 and the resilient arm 3, and the pipe retaining position illustrated in Figure 1. In this regard, the yoke arm 3 is formed and the hinge axis 10 positioned such that the cradle 7 is held detachably in the pipe retaining position through a snap-locking action when the pipe is inserted between the cradle and the yoke arm 3 and the cradle is displaced upwards to the position illustrated in Figure 1. In the case of the illustrated embodiment this snap-locking action is achieved because the distance between the hinge axis 10 of the cradle and the free outer end of the yoke arm is shorter than the distance between the pivot axis 10 and the central region of the yoke arm 3.

When securing the pipe 9 ot a supporting structure with the aid of the pipe fastener 1, the pipe 9 is placed on the cradle 7 and the pipe and cradle then swung up towards the yoke arm 3, such that the pipe is snapped securely between the yoke arm and the cradle through the aforedescribed snap-locking action. The pipe fastener 1 is then secured to the support structure 6 by means of the screw 5, therewith attaching the pipe permanently in relation to the support structure.

The invention thus provides a pipe fastener construction which can be readily given the following attributes: Sufficient strength to hold the pipe securely in the position intended; features which are acceptable aesthetically in visible installations; and a construction which can be easily cleaned, i.e. a fastener construction which lacks dust collecting nooks and crannies. The inventive pipe fastener also allows pipes to be fitted at a distance from the support, thereby facilitating cleaning.

The invention is not limited to the illustrated embodiment, but can be achieved in any desirable manner within the scope of the inventive concept defined in the following claims. For example, the aforedescribed pipe fastener illustrated in the drawing is a single-pipe fastener. However, it is possible within the scope of the invention to provide a double-fastener for securing two pipes simultaneously to a support structure, e.g. a hot water pipe and a cold water pipe, in which case the attachment yoke will have two yoke arms which extend in mutually opposite directions, and two pivotal pipe-carrying cradles, each located beneath its respective yoke arm.

**Claim**

A pipe fastener for securing a pipe in relation to a support structure and including a spacer element (7) adapted to be located between a pipe (9) and the support structure (6), and further including a fastener yoke (2, 3) which can be attached to the support structure and which comprises a yoke arm (3) which extends over the spacer element (7) and over any pipe placed on said spacer element and has a cupped seating to receive the pipe, wherein the spacer element (7) is pivotable in relation to the attachment yoke (2, 3) to and from a pipe receiving position in which a pipe (9) can be inserted between the spacer element (7) and the attachment yoke (2, 3) and wherein the distance between the pivot axis (10) of the spacer element (7) and the outer end of the yoke arm (3) is shorter than the distance between the pivot axis and the central region of said yoke arm (3), characterized in that the spacer element (7) is a cradle having a seating (8) which is cupped to receive the pipe, the cupped seatings of the cradle and yoke being such as to exert a snap-locking action on a pipe (9) inserted between said cradle and said yoke arm to retain said pipe therebetween.

**Patentanspruch**

Befestigungsvorrichtung für ein Rohr in bezug auf eine tragende Struktur, mit einem zwischen dem Rohr (9) und der tragenden Struktur (6) angeordneten Abstandselement (7) und einem an der tragenden Struktur anzubringenden Haltejoch (2, 3), das einen über das Abstandselement und über ein auf diesem angeordneten Rohr sich erstreckenden Jocharm (3) umfaßt, der eine kalottenförmige Sitzfläche zur Aufnahme des Rohres aufweist, wobei das Abstandselement (7) in bezug auf das Haltejoch aus einer Halte- in eine Aufnahmeposition schwenkbar ist, in der ein Rohr (9) zwischen Abstandselement (7) und dem Haltejoch (2, 3) eingefügt werden kann, und wobei der Abstand zwischen der Schwenkachse (10) des Abstandselements (7) und dem äußeren Ende des Jocharmes (3) kürzer als der Abstand zwischen der Schwenkachse und dem zentralen Bereich des Jocharmes (3) ist, dadurch gekennzeichnet, daß das Abstandselement (7) eine Gabel mit einer der Aufnahme des Rohres dienenden kalottenförmigen Aufnahme ist und daß die kalottenförmigen Aufnahmen von Gabel und Joch derart ausgebildet sind, daß diese in bezug auf das zwischen Gabel und Jocharm eingesetzte Rohr eine Rastverriegelung zwecks Festlegung des dazwischenliegenden Rohres bilden.

**Revendication**

Une fixation de tube pour fixer un tube par rapport à une structure de support et comportant un élément d'espacement (7) susceptible d'être disposé entre un tube (9) et la structure de support (6) et comportant, en outre, une bride de fixation (2, 3) qui peut être fixée à la structure de support et qui comporte un bras de bride (3) qui s'étend sur l'élément d'espacement (7) et sur un tube quelconque placé sur ledit élément d'espacement et comporte un siège de forme incurvée destiné à recevoir le tube, dans lequel l'élément d'espacement (7) est susceptible de pivoter par rapport à la bride de fixation (2, 3) vers et en retour d'une position de réception de tube pour laquelle un tube (9) peut être inséré entre l'élément d'espacement (7) et la bride de fixation (2, 3) et dans lequel la distance entre l'axe de pivotement (10) de l'élément d'espacement (7) et l'extrémité extérieure du bras de bride (3) est inférieure à la distance entre l'axe de pivotement et la zone centrale dudit bras de bride (3), caractérisée en ce que l'élément d'espacement (7) est un berceau muni d'un siège (8) qui présente une forme incurvée pour recevoir le tube, les sièges incurvés du berceau et de la bride étant disposés de manière à exercer une action de verrouillage à détente sur un tube (9) inséré entre ledit berceau et ledit bras de bride afin de retenir entre-eux ledit tube.

Fig. 1

Fig. 2

Fig. 3